# EUROPEAN PATENT SPECIFICATION

(11) **EP 2 827 424 B1**
(45) Date of publication and mention of the grant of the patent: **20.01.2016**
(21) Application number: 13761158.8
(22) Date of filing: 01.03.2013
(51) Int. Cl.: H01M 8/04, H01M 8/10

(54) **FUEL-CELL SYSTEM AND CONTROL METHOD FOR FUEL-CELL SYSTEM**
BRENNSTOFFZELLENSYSTEM UND STEUERVERFAHREN FÜR DAS BRENNSTOFFZELLENSYSTEM
SYSTÈME DE PILE À COMBUSTIBLE ET PROCÉDÉ DE COMMANDE POUR SYSTÈME DE PILE À COMBUSTIBLE

(30) Priority: 13.03.2012 JP 2012056350
(43) Date of publication of application: 21.01.2015
(73) Proprietor: Nissan Motor Co., Ltd., Yokohama-shi, Kanagawa 221-0023 (JP)
(72) Inventor: IKEZOE, Keigo, Atsugi-shi Kanagawa 243-0123 (JP); CHIKUGO, Hayato, Atsugi-shi Kanagawa 243-0123 (JP); ICHIKAWA, Yasushi, Atsugi-shi Kanagawa 243-0123 (JP)
(74) Representative: Grünecker Patent- und Rechtsanwälte PartG mbB
(86) International application number: PCT/JP2013/055642
(87) International publication number: WO 2013/137017

(56) References cited:
- WO-A1-2012/115196
- JP-A- H11 191 422
- JP-A- 2003 109 627
- JP-A- 2005 174 757
- JP-A- 2005 276 588
- JP-A- 2006 134 807
- JP-A- 2006 309 970
- JP-A- 2010 123 501

## Description

### TECHNICAL FIELD

This invention relates to a fuel cell system and a method of controlling a fuel cell system.

### BACKGROUND ART

Hitherto, there is known a fuel cell system including a normally-closed solenoid valve provided on an anode gas supply passage, and a normally-open solenoid valve and a recycle tank (buffer tank) provided on an anode gas discharge passage in this order from an upstream side (see JP 2007-517369 A). This disclosed fuel cell system is a fuel cell system of an anode gas non-circulation type, which does not return an unused anode gas discharged to the anode gas discharge passage to the anode gas supply passage, and carries out an operation of periodically opening/closing the normally-closed solenoid valve and the normally-open solenoid valve.

### SUMMARY OF INVENTION

An anode pressure of a fuel cell generally needs to be increased depending on a load. When a driver or the like requests a transition from a high load operation to a low load operation based on this assumption, the following inconvenience may occur in the fuel cell system of the anode off-gas non-circulation type.

When the operation state transitions from the high load state to the low load state, the anode pressure needs to be decreased to a pressure corresponding to the load. On this occasion, the pressure in an anode gas system is decreased by the consumption of the anode gas for the power generation depending on the load, and the pressure in power generation areas in the stack is decreased by the consumption of the anode gas in the power generation areas. It has been found out that, as a result, the anode gas containing impurities flows backward from the buffer tank relatively high in pressure to the power generation areas, and points locally low in anode gas concentration are generated in anode gas flow passages in the fuel cell. The anode gas required for a reaction is insufficient at the points, resulting in a possible decrease in power generation efficiency.

On this occasion, the anode gas containing the impurities needs to be prevented from flowing backward by increasing an opening degree of the purge valve provided behind the buffer tank for discharging the anode off-gas to the atmosphere, thereby purging a large amount of the anode off-gas. However, the inventers of this invention recognized that when an on/off valve is used as the purge valve by considering the cost, and the purge valve opening degree is increased to a high opening degree in order to solve the problem, the purge amount is too large during the steady pulsation operation, resulting in a possible discard of an excessive amount of the anode off-gas.

In view of the above, this invention has an object to provide a technology capable of preventing an anode gas concentration from being decreased in power generation areas by a backward flow of an anode gas containing impurities from a buffer tank during a descending transition where a transition from a high load operation to a low load operation is required even when an on/off valve is used.

A fuel cell system according to one aspect of this invention includes: a pressure regulating valve for controlling a pressure of an anode gas; and a purge valve for controlling a discharge amount of an anode off-gas discharged from a fuel cell. In the fuel cell system, the purge valve is configured to change an opening area thereof on at least two stages. The fuel cell system further includes: a pulsation operation control means configured to control the pressure regulating valve so that the pressure of the anode gas in the fuel cell when a load is high becomes higher than when the load is low, and so that the pressure of the anode gas is periodically increased and decreased at a predetermined load; and a purge valve control means configured to increase the opening area of the purge valve used during a descending transition operation so that the opening area is larger than the opening area obtained during other operations.

Embodiments of the present invention and merits of the present invention will be described below in detail together with the attached drawings.

### BRIEF DESCRIPTION OF DRAWINGS

FIG. 1A is a diagram illustrating a configuration of a fuel cell system according to a first embodiment, and a perspective view of a fuel cell.
FIG. 1B is a diagram illustrating the configuration of the fuel cell system according to the first embodiment, and a cross sectional view of the fuel cell of FIG. 1A taken along the line 1B-1B.
FIG. 2 is a schematic configuration diagram of a fuel cell system of an anode gas non-circulation type according to the first embodiment.
FIG. 3 is a diagram showing a pulsation operation during a steady operation where an operation state of the fuel cell system is constant.
FIG. 4 is a flowchart of pulsation operation control.
FIG. 5 is a time chart showing a change in an anode pressure when the anode pressure is decreased to a lower limit pressure by fully closing a pressure regulating valve during a descending transition operation.
FIG. 6 is a diagram illustrating a reason for generation of portions locally lower in anode gas concentration than other portions in anode gas flow passages.
FIG. 7 is a flowchart of open/close control for a purge valve during the descending transition operation carried out by the fuel cell system according to the first embodiment.
FIG. 8 is an example of a time chart showing temporal changes in opening/closing of a purge valve, opening/closing of another purge valve, the anode pressure, and a load in the fuel cell system according to the first embodiment.
FIG. 9 is an example of a time chart in a case where control of simultaneously opening the purge valve as well is carried out during the descending transition operation.
FIG. 10 is a flowchart of the open/close control for the purge valve during the descending transition operation carried out by a fuel cell system according to a second embodiment.
FIG. 11 is an example of a time chart showing the temporal changes in the opening/closing of the purge valve, the opening/closing of another purge valve, the anode pressure, and the load in the fuel cell system according to the second embodiment.
FIG. 12 is a schematic configuration diagram of a fuel cell system according to a third embodiment.
FIG. 13 is a flowchart of the open/close control for the purge valve during the descending transition operation carried out by the fuel cell system according to the third embodiment.
FIG. 14 is an example of a time chart showing temporal changes in the opening/closing of the purge valve, the opening/closing of another purge valve, gas pressures, and the load in the fuel cell system according to the third embodiment.

### DESCRIPTION OF EMBODIMENTS

### First Embodiment

A fuel cell generates electric power by sandwiching an electrolyte membrane between an anode electrode (fuel electrode) and a cathode electrode (oxidizer electrode), supplying the anode electrode with an anode gas (fuel gas) containing hydrogen, and supplying the cathode electrode with a cathode gas (oxidizer gas) containing oxygen. Electrode reactions progressing on both the anode electrode and the cathode electrode are as follows.

Anode electrode: 2H₂→4H⁺+4e⁻ ··· (1)

Cathode electrode: 4H⁺+4e⁻+O₂→2H₂O ··· (2)

As a result of the electrode reactions represented in Equations (1) and (2), the fuel cell generates an electromotive force of approximately one volt.

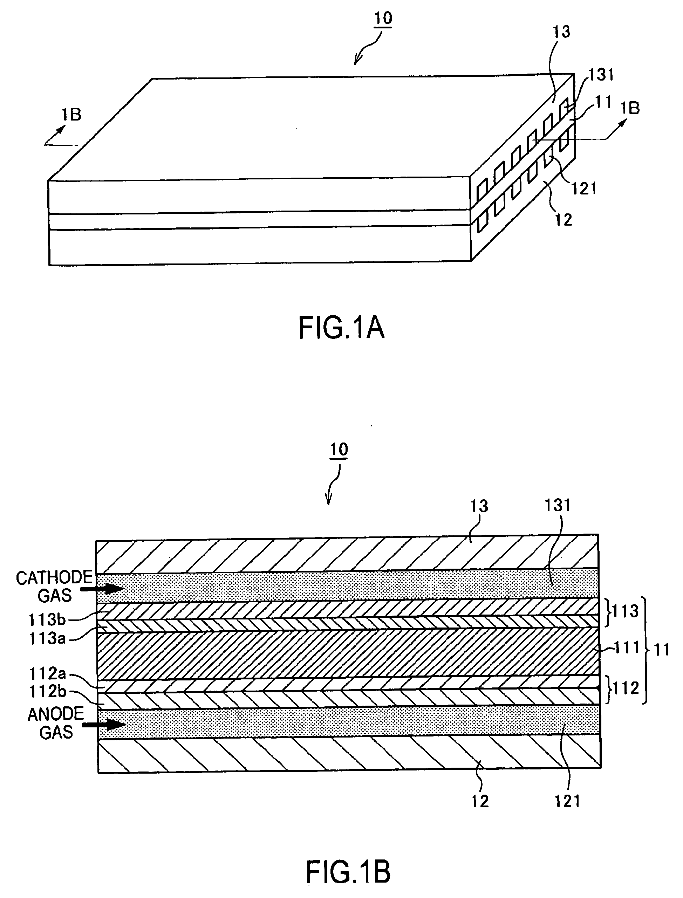

FIG. 1A and FIG. 1B are diagrams each illustrating a configuration of a fuel cell according to a first embodiment. FIG. 1A is a perspective view of a fuel cell 10. FIG. 1B is a cross sectional view of the fuel cell of FIG. 1A taken along the line B-B.

The fuel cell 10 is configured by arranging an anode separator 12 and a cathode separator 13 on both front and rear surfaces of a membrane electrode assembly (hereinafter referred to as "MEA") 11.

The MEA 11 includes an electrolyte membrane 111, an anode electrode 112, and a cathode electrode 113. The MEA 11 includes the anode electrode 112 on one surface of the electrolyte membrane 111, and the cathode electrode 113 on the other surface thereof.

The electrolyte membrane 111 is a proton conductive ion-exchange membrane formed by a fluorine resin. The electrolyte membrane 111 presents an excellent electric conductivity in a wet state.

The anode electrode 112 includes a catalyst layer 112a and a gas diffusion layer 112b. The catalyst layer 112a is in contact with the electrolyte membrane 111. The catalyst layer 112a is formed by platinum or carbon black particles carrying platinum and the like. The gas diffusion layer 112b is provided on an outside (an opposite side of the electrolyte membrane 111) of the catalyst layer 112a, and is in contact with the anode separator 12. The gas diffusion layer 112b is formed by a member having sufficient gas diffusion property and electric conductivity, and is formed by, for example, a carbon cloth formed by weaving fibers made of a carbon fiber.

The cathode electrode 113 includes a catalyst layer 113a and a gas diffusion layer 113b similarly to the anode electrode 112.

The anode separator 12 is in contact with the gas diffusion layer 112b. The anode separator 12 includes a plurality of groove-shaped anode gas flow passages 121 on the side in contact with the gas diffusion layer 112b for supplying the anode electrode 112 with the anode gas.

The cathode separator 13 is in contact with the gas diffusion layer 113b. The cathode separator 13 includes a plurality of groove-shaped cathode gas flow passages 131 on the side in contact with the gas diffusion layer 113b for supplying the cathode electrode 113 with the cathode gas.

The anode gas flowing through the anode gas flow passages 121 and the cathode gas flowing through the cathode gas flow passages 131 flow in parallel with each other and in the same direction. The anode gas and the cathode gas may flow in parallel with each other and in directions opposite to each other.

When the fuel cell 10 is used as a power source for a vehicle, required electric power is large, and hence the fuel cells 10 are used as a fuel cell stack constructed by stacking some hundreds of fuel cells. Then, a fuel cell system for supplying the fuel cell stack with the anode gas and the cathode gas is constructed to extract the electric power for driving the vehicle.

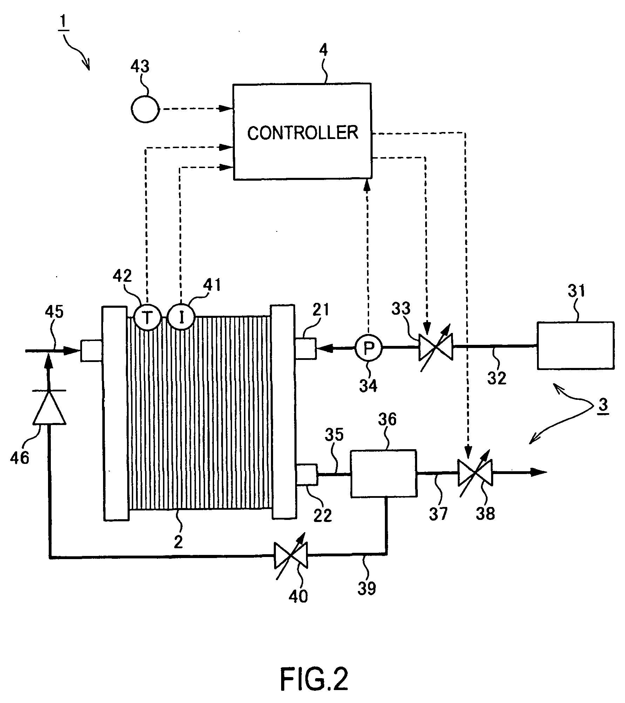

FIG. 2 is a schematic configuration diagram of a fuel cell system 1 of an anode gas non-circulation type according to the first embodiment.

The fuel cell system 1 includes a fuel cell stack 2, an anode gas supply device 3, and a controller 4.

The fuel cell stack 2 is constructed by stacking a plurality of the fuel cells 10, and receives the supply of the anode gas and the cathode gas to generate the electric power required to drive the vehicle (for example, electric power required to drive a motor).

A cathode gas supply/discharge device for supplying/discharging the cathode gas to/from the fuel cell stack 2, and a cooling device for cooling the fuel cell stack 2 are not principal parts of this invention, and are therefore not shown in order to promote understanding. In this embodiment, air is used as the cathode gas.

The anode gas supply device 3 includes a high pressure tank 31, an anode gas supply passage 32, a pressure regulating valve 33, a pressure sensor 34, an anode gas discharge passage 35, a buffer tank 36, a purge passage 37, a purge valve 38, a purge passage 39, and a purge valve 40.

The high pressure tank 31 stores the anode gas to be supplied to the fuel cell stack 2 while the anode gas is maintained in a high pressure state.

The anode gas supply passage 32 is a passage for supplying the fuel cell stack 2 with the anode gas discharged from the high pressure tank 31. The anode gas supply passage 32 is connected to the high pressure tank 31 at one end and to an anode gas inlet port 21 of the fuel cell stack 2 at the other end.

The pressure regulating valve 33 is provided in the anode gas supply passage 32. The pressure regulating valve 33 adjusts the anode gas discharged from the high pressure tank 31 to have a desired pressure, and then supplies the fuel cell stack 2 with the anode gas. The pressure regulating valve 33 is an electromagnetic valve capable of adjusting an opening degree continuously or stepwise, and the opening degree thereof is controlled by the controller 4. The controller 4 controls the opening degree of the pressure regulating valve 33 by controlling a current amount to be supplied to the pressure regulating valve 33.

The pressure sensor 34 is provided in the anode gas supply passage 32 downstream of the pressure regulating valve 33. The pressure sensor 34 detects a pressure of the anode gas flowing through the anode gas supply passage 32 downstream of the pressure regulating valve 33. In this embodiment, the pressure of the anode gas detected by the pressure sensor 34 is substituted for a pressure (hereinafter referred to as "anode pressure") of the entire anode system including the respective anode gas flow passages 121 inside the fuel cell stack and the buffer tank 36.

The anode gas discharge passage 35 is connected to an anode gas outlet port 22 of the fuel cell stack 2 at one end and to a top part of the buffer tank 36 at the other end. A mixed gas (hereinafter referred to as "anode off-gas") of a surplus anode gas which has not been used for the electrode reaction and impurity gases such as nitrogen and water vapor which have been cross-leaked from the cathode side to the anode gas flow passages 121 is discharged to the anode gas discharge passage 35.

The buffer tank 36 temporarily stores the anode off-gas which has flown through the anode gas discharge passage 35. A part of the water vapor in the anode off-gas is condensed into liquid water in the buffer tank 36, and is separated from the anode off-gas.

The purge passage 37 is connected to a bottom of the buffer tank 36 at one end. The other end of the purge passage 37 forms an open end. The anode off-gas and the liquid water accumulated in the buffer tank 36 are discharged via the purge passage 37 to the outside air from the open end.

The purge valve 38 is provided on the purge passage 37. The purge valve 38 is an electromagnetic valve capable of adjusting an opening degree continuously or stepwise, and the opening degree thereof is controlled by the controller 4. The amount of the anode off-gas discharged from the buffer tank 36 via the purge passage 37 to the outside air is adjusted by adjusting the opening degree of the purge valve 38, thereby adjusting the anode gas concentration in the buffer tank 36 to be a certain concentration or less. This is because when the anode gas concentration in the buffer tank 36 becomes too high, the anode gas amount discharged from the buffer tank 36 via the purge passage 37 to the outside air increases, which is a waste.

In addition to the purge passage 37, the purge passage 39 is connected to the buffer tank 36 in the fuel cell system according to this embodiment. The purge valve 40 is provided on the purge passage 39. The purge valve 40 is an electromagnetic valve capable of adjusting an opening degree continuously or stepwise, and the opening degree thereof is controlled by the controller 4. Particularly, in this embodiment, an opening area of the purge valve 40 is larger than an opening area of the purge valve 38.

The other end of the purge valve 40 is connected via a check valve 46 to a cathode gas supply passage 45. In other words, the anode off-gas discharged via the purge valve 40 is returned to the cathode gas supply passage 45, thereby controlling the anode gas in the anode off-gas to react with the cathode gas on a catalyst in the fuel cell stack 2, resulting in consumption of the anode gas. As a result, the anode gas is prevented from being discharged to the outside air compared with a configuration of discharging the anode off-gas to the outside air.

Moreover, the check valve 46 for preventing the gas from flowing in a direction from the cathode gas supply passage 45 to the purge valve 40 is provided between the purge valve 40 and the cathode gas supply passage 45. In other words, the check valve 46 has a function of controlling the gas to flow only in the direction from the buffer tank 36 via the purge valve 40 to the cathode gas supply passage 45. With this, the cathode gas is prevented from flowing backward in the direction from the cathode gas supply passage 45 to the purge valve 40, thereby decreasing the anode gas concentration in the buffer tank 36, resulting in instability of a cell voltage.

The controller 4 is constructed by a microcomputer including a central processing unit (CPU), a read-only memory (ROM), a random access memory (RAM), and an input/output interface (I/O interface).

The controller 4 inputs signals for detecting operation states of the fuel cell system 1 such as signals from the pressure sensor 34 described above as well as a current sensor 41 for detecting an output current of the fuel cell stack 2, a temperature sensor 42 for detecting a temperature (hereinafter referred to as "coolant temperature") of coolant for cooling the fuel cell stack 2, and an accelerator stroke sensor 43 for detecting a depressed amount (hereinafter referred to as "accelerator operation amount") of an accelerator pedal.

Based on those input signals, the controller 4 carries out the pulsation operation of periodically opening/closing the pressure regulating valve 33 to periodically increase/decrease the anode pressure, and adjusts the opening degree of the purge valve 38 to adjust the flow rate of the anode off-gas discharged from the buffer tank 36, thereby maintaining the anode gas concentration inside the buffer tank 36 to a given concentration or less.

If the anode gas is continued to be supplied from the high pressure tank 31 to the fuel cell stack 2 while the pressure regulating valve 33 remains to be opened in the fuel cell system 1 of the anode non-circulation type, the anode off-gas including the unused anode gas discharged from the fuel cell stack 2 is continued to be discharged from the buffer tank 36 via the purge passage 37 to the outside air, resulting in a waste.

Thus, in this embodiment, a pulsation operation of periodically increasing/decreasing the anode pressure by periodically opening/closing the pressure regulating valve 33 is carried out. The pulsation operation can control the anode off-gas accumulated in the buffer tank 36 to flow backward to the fuel cell stack 2 during the decrease in the anode pressure. With this, the anode gas in the anode off-gas can be used again, thereby decreasing the anode gas amount discharged to the outside air, resulting in elimination of the waste.

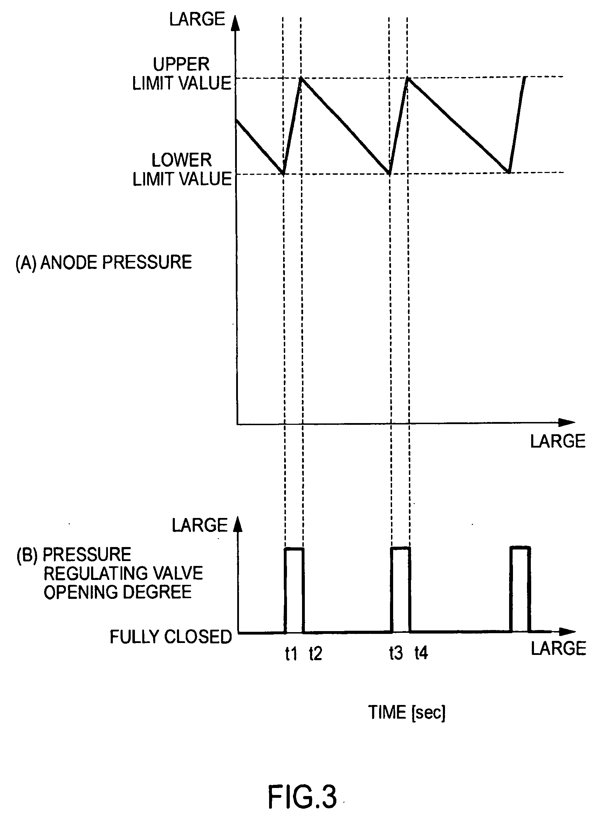

FIG. 3 is a diagram showing the pulsation operation during a steady operation where an operation state of the fuel cell system 1 is constant.

As shown in FIG. 3(A), the controller 4 calculates a target output of the fuel cell stack 2 based on the operation state (load of the fuel cell stack) of the fuel cell system 1, and sets an upper limit value and a lower limit value of the anode pressure corresponding to the target output. Then, the controller 4 periodically increases/decreases the anode pressure between the set upper limit value and lower limit value of the anode pressure.

Specifically, when the anode pressure reaches the lower limit value at a time *t1*, as shown in FIG. 3(B), the pressure regulating valve 33 is opened to such a degree that the anode pressure can be increased to the upper limit value. In this state, the anode gas is supplied from the high pressure tank 31 to the fuel cell stack 2, and is discharged to the buffer tank 36.

When the anode pressure reaches the upper limit value at a time *t2*, as shown in FIG. 3(B), the pressure regulating valve 33 is fully closed, and the supply of the anode gas from the high pressure tank 31 to the fuel cell stack 2 is stopped. Then, by the electrode reaction (1) described above, the anode gas left in the anode gas flow passages 121 inside the fuel cell stack is consumed as the time elapses, and the anode pressure thus decreases by the consumed amount of the anode gas.

Moreover, when the anode gas left in the anode gas flow passages 121 is consumed, the pressure in the buffer tank 36 temporarily becomes higher than the pressure in the anode gas flow passages 121, and the anode off-gas thus flows backward from the buffer tank 36 to the anode gas flow passages 121. As a result, the anode gas left in the anode gas flow passages 121 and the anode gas in the anode off-gas that has flown backward to the anode gas flow passages 121 are consumed as the time elapses, and the anode pressure further decreases.

When the anode pressure reaches the lower limit value at a time *t3*, the pressure regulating valve 33 is opened as at the time *t1.* Then, when the anode pressure again reaches the upper limit value at a time *t4*, the pressure regulating valve 33 is fully closed.

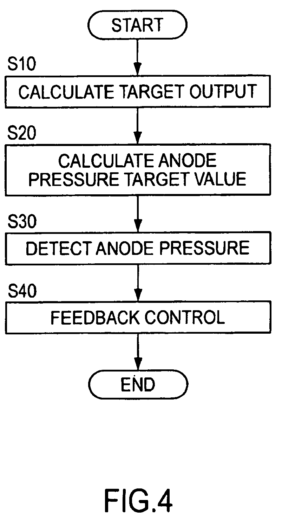

FIG. 4 is a flowchart of pulsation operation control. Processing starting from Step S10 is carried out by the controller 4.

In Step S10, the controller 4 calculates a target output power of the fuel cell stack 2 based on the operation state of the fuel cell system 1.

In Step S20, the controller 4 sets the upper limit value and the lower limit value of the anode pressure during the pulsation operation based on the target output power of the fuel cell stack 2 calculated in Step S10, and determines an anode pressure target value based on the set upper limit value and lower limit value. When the anode pressure is increased, the upper limit value is the anode pressure target value, and when the anode pressure is decreased, the lower limit value is the anode pressure target value.

In Step S30, the anode pressure is detected by the pressure sensor 34.

In Step S40, the controller 4 carries out feedback control of controlling the pressure regulating valve 33 to open/close so that the anode pressure approaches the anode pressure target value based on a difference between the anode pressure target value determined in Step S20 and the anode pressure detected in Step S30.

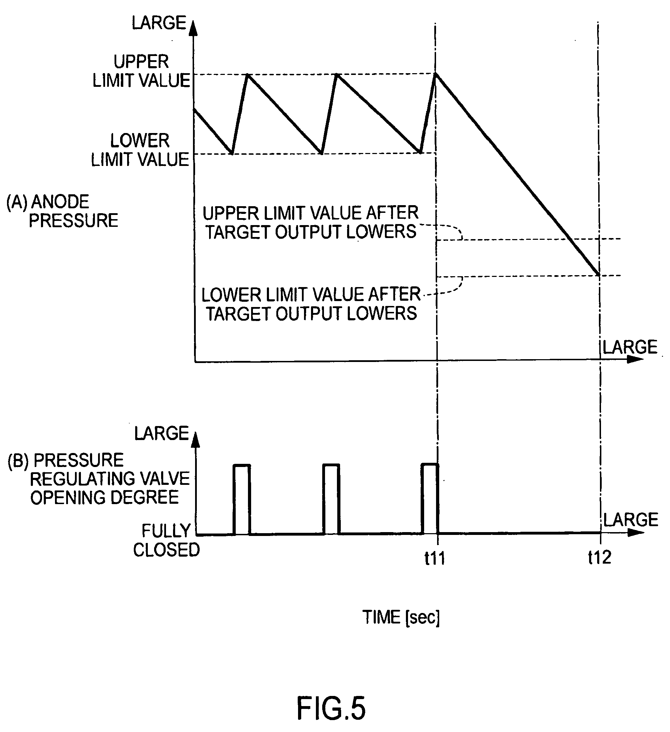

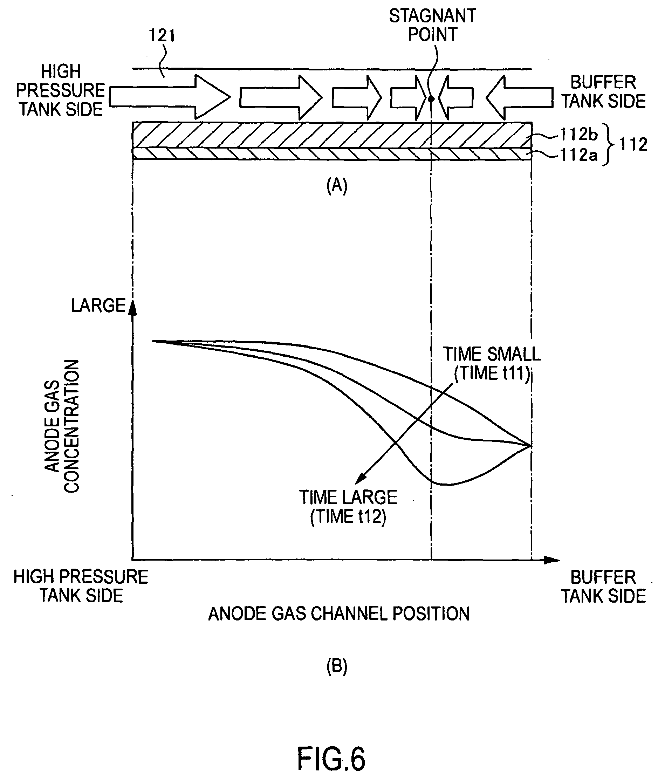

On this occasion, it has been found out that, in a case where the pulsation operation is carried out in this way, when the operation state of the fuel cell system 1 changes, specifically, in a transition operation (hereinafter referred to as "descending transition operation") of decreasing the output power of the fuel cell stack 2 toward the target output power when the target output power of the fuel cell system 2 decreases, portions where the anode gas concentration is locally lower than those of other portions are generated in the anode gas flow passages 121. Referring to FIGS. 5 and 6, a description is now given of this point.

FIG. 5 is a time chart showing a change in anode pressure when the anode pressure is decreased to the lower limit pressure by fully closing the pressure regulating valve 33 during the descending transition operation.

For example, when the acceleration operation amount decreases and the target output power of the fuel cell stack 2 decreases at a time *t11*, as shown in FIG. 5(A), the upper limit value and the lower limit value of the anode pressure are set in response to the decreased target output power.

On this occasion, as shown in Figs. 5(A) and 5(B), when the pressure regulating valve 33 is fully closed at the time *t11*, and the anode pressure is decreased to the lower limit value (time *t12*), portions locally lower in anode gas concentration than other portions are generated in the anode gas flow passages 121. This reason will be described by referring to Figs. 6.

FIG. 6 is a diagram illustrating the reason for the generation of the portions locally lower in anode gas concentration than other portions in the anode gas flow passages 121. FIG. 6(A) is a diagram illustrating flows of the anode gas and the anode off-gas in each anode gas flow passage 121 when the pressure regulating valve 33 is fully closed during the descending transition operation. FIG. 6(B) is a diagram showing concentration distributions of the anode gas in each anode gas flow passage 121 as the time elapses when the pressure regulating valve 33 is fully closed during the descending transition operation.

As illustrated in FIG. 6(A), when the pressure regulating valve 33 is fully closed, the anode gas remaining in the anode gas flow passages 121 flows toward the buffer tank 36 side by inertia. Then, when the anode gas left in the anode gas flow passages 121 is consumed, the pressure in the buffer tank 36 temporarily increases above the pressure in the anode gas flow passages 121, and the anode off-gas thus flows backward from the buffer tank 36 side to the anode gas flow passages 121.

Then, at merge portions of the anode gas flowing through the anode gas flow passages 121 toward the buffer tank 36 side and the anode off-gas flowing backward from the buffer tank 36 side to the anode gas flow passages 121, stagnant points where gas flow rates of the respective gases are zero are generated.

When the stagnant points are generated in the anode gas flow passages 121, the nitrogen in the anode off-gas not used for the electrode reaction represented by (1) is accumulated at a neighborhood of each stagnant point as the time elapses. As a result, the nitrogen concentration in the neighborhood of each stagnant point becomes higher than those in other portions as the time elapses, and as shown in FIG. 6(B), the anode gas concentration in the neighborhood of each stagnant point becomes lower than those in other portions as the time elapses.

As described above, the stagnant points exist in the anode gas flow passages 121 after the descending transition operation, and the portions locally lower in anode gas concentration are generated in the anode gas flow passages 121.

Thus, in the fuel cell system according to this embodiment, during the descending transition operation, the purge valve 40 larger in opening area than the purge valve 38 is opened, thereby preventing the anode off-gas from flowing backward from the buffer tank 36 to the fuel cell stack 2, and preventing the anode gas concentration from decreasing in the fuel cell stack 2.

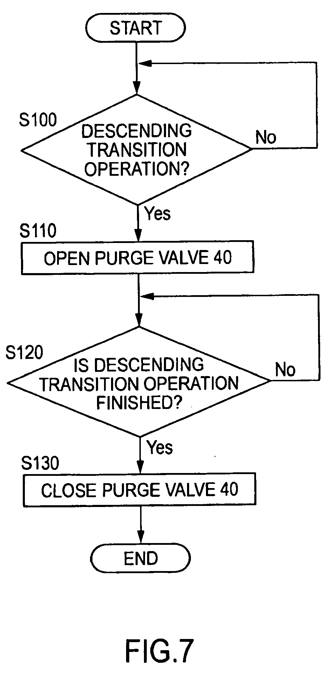

FIG. 7 is a flowchart of open/close control for the purge valve during the descending transition operation carried out by the fuel cell system according to the first embodiment. The processing starting from Step S100 is carried out by the controller 4.

In Step S100, the controller 4 determines whether the operation has entered the descending transition operation or not. Whether the operation has entered the descending transition operation or not can be determined based on, for example, a decrease in the load receiving the power supply (decrease in output required from the fuel cell stack 2). When the controller 4 determines that the operation has not entered the descending transition operation, the controller 4 waits in Step S100, and when the controller 4 determines that the operation has entered the descending transition operation, the controller 4 proceeds to Step S110.

In Step S110, the controller 4 opens the purge valve 40.

In Step S120, the controller 4 determines whether the descending transition operation is finished or not. When the controller 4 determines that the descending transition operation has not been finished, the controller 4 waits in Step S120, and when the controller 4 determines that the descending transition operation has been finished, the controller proceeds to Step S130.

In Step S130, the controller 4 closes the purge valve 40.

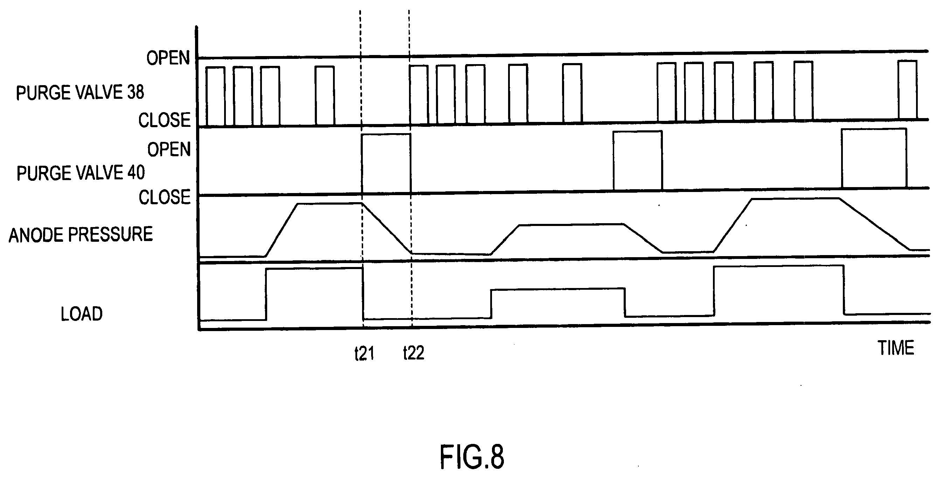

FIG. 8 is an example of a time chart showing temporal changes in opening/closing of the purge valve 38, opening/closing of the purge valve 40, the anode pressure, and the load in the fuel cell system according to the first embodiment. Control of opening/closing the purge valve 38 smaller in opening area is carried out during the normal operation other than the descending transition operation. When the load decreases at a time *t21*, the target output power of the fuel cell stack 2 decreases, and thus the target anode pressure also decreases and the actual anode pressure decreases. In other words, the operation enters the descending transition operation at the time *t21*, and the purge valve 40 larger in opening area is thus opened. Then, the descending transition operation finishes at a time *t22*, and the purge valve 40 is thus closed.

In the example shown in FIG. 8, the purge valve 38 smaller in opening area is closed during the descending transition operation. It should be noted that the purge valve 38 may be simultaneously opened during the descending transition operation.

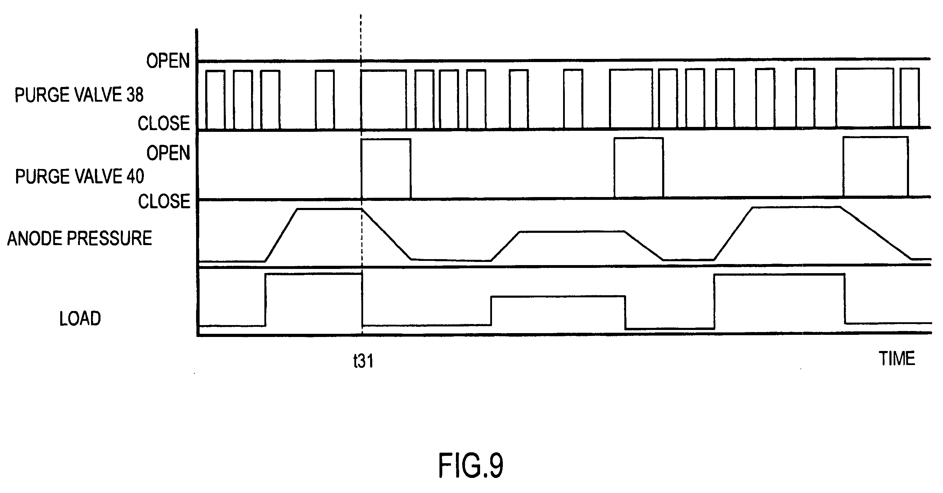

FIG. 9 is an example of a time chart in a case where control of simultaneously opening the purge valve 38 as well is carried out during the descending transition operation. In FIG. 9, as in FIG. 8, the temporal changes are shown in a sequence of the opening/closing of the purge valve 38, the opening/closing of the purge valve 40, the anode gas pressure, and the load from the top to bottom.

At a time *t31,* when the load decreases, and the target output power from the fuel cell stack 2 decreases, the actual anode pressure decreases as a result of the decrease in the target anode pressure. In other words, the controller 4 enters the descending transition operation at the time *t31.* The purge valve 38 as well as the purge valve 40 is opened simultaneously at this time. With this, the anode off-gas can be prevented from flowing backward from the buffer tank 36 to the fuel cell stack 2 more than the control of opening only the purge valve 40 during the descending transition operation, thereby more preventing the anode gas concentration in the fuel cell stack 2 from decreasing.

The opening area of the purge valve 40 may be the same as or smaller than the opening area of the purge valve 38 in the system of carrying out the control of opening the purge valve 38 as well as purge valve 40 during the descending transition operation.

The fuel cell system according to the first embodiment described above includes the buffer tank 36 for accumulating the anode off-gas discharged from the fuel cell, which is configured to carry out the pulsation operation of controlling the pressure regulating valve 33 so that the anode gas pressure in the fuel cell when the load is high becomes higher than when the load is low and so that the anode gas pressure is periodically increased and decreased at the predetermined load, the opening area of the purge valve used during the descending transition operation is increased so as to be larger than the opening area during other operations. More specifically, the control of controlling the purge valve 38 to open/close is carried out during operations other than the descending transition operation, and the control of opening the purge valve 40 larger in the opening area than the purge valve 38 is carried out during the descending transition operation. With this, during the descending transition operation, the anode off-gas is prevented from flowing backward from the buffer tank 36 to the fuel cell stack 2, thereby preventing the anode gas concentration in the fuel cell stack 2 from decreasing.

Moreover, during the descending transition operation, the anode off-gas can be more prevented from flowing backward from the buffer tank 36 to the fuel cell stack 2 by carrying out the control of opening the purge valve 38 as well as the purge valve 40, and the anode gas concentration in the fuel cell stack 2 can thus be more prevented from decreasing.

Moreover, the one end of the purge valve 40 is connected to the cathode gas supply passage 45 for supplying the fuel cell with the cathode gas, and thus the anode gas in the anode off-gas can be controlled to react with the cathode gas to be consumed on the catalyst in the fuel cell by returning the anode off-gas to the cathode gas supply passage 45. With this, the anode gas is prevented from being discharged to the outside air compared with a configuration of discharging the anode off-gas to the outside air.

Further, the check valve 46 for controlling the gas to flow only in the direction from the purge valve 40 to the cathode gas supply passage 45 is provided between the purge valve 40 and the cathode gas supply passage 45, and the cathode gas is thus prevented from flowing backward in the direction from the cathode gas supply passage 45 to the purge valve 40, thereby decreasing the anode gas concentration in the buffer tank 36, resulting in the instability of the cell voltage.

### Second Embodiment

In the fuel cell system according to the first embodiment, the purge valve 40 larger in the opening area is opened when the operation enters the descending transition operation. However, the decrease in anode gas concentration is small at the beginning of the entrance into the descending transition operation, and thus the anode off-gas hardly flows backward from the buffer tank 36 and the necessity of opening the purge valve 40 is low.

Thus, in a fuel cell system according to a second embodiment, control is carried out so as to open the purge valve 40 when the decrease amount of the anode pressure becomes equal to or more than a predetermined amount during the descending transition operation. It should be noted that an appropriate value is set in advance to the predetermined amount to be compared with the anode pressure decrease amount.

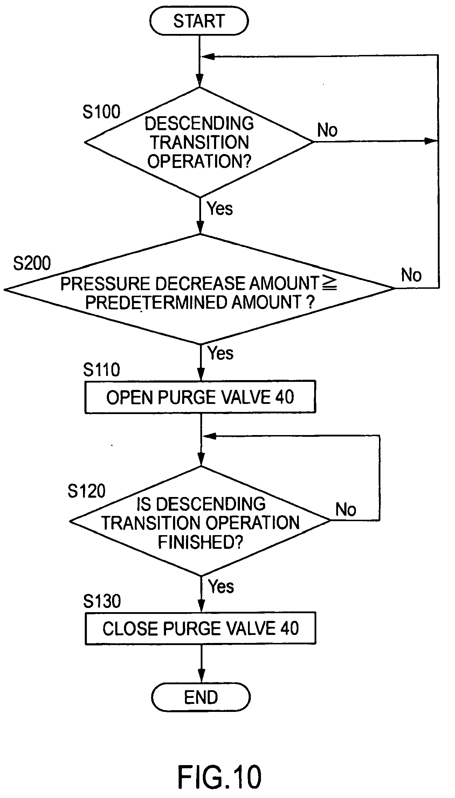

FIG. 10 is a flowchart of the open/close control for the purge valve during the descending transition operation carried out by the fuel cell system according to the second embodiment. Steps in which the same processing as that in the steps in the flowchart illustrated in FIG. 7 is carried out are denoted by the same reference numerals, and a detailed description thereof is omitted.

In Step S100, when the controller 4 determines that the operation enters the descending transition operation, the controller 4 proceeds to Step S200.

In Step S200, the controller 4 determines whether the decrease amount in the anode pressure is equal or more than the predetermined amount. When the controller 4 determines that the decrease amount in the anode pressure is less than the predetermined amount, the controller 4 returns to Step S100, and when the controller 4 determines that the decrease amount is equal to or more than the predetermined amount, the controller 4 proceeds to Step S110. Processing starting from Step S110 is the same as the processing in the flowchart illustrated in FIG. 7.

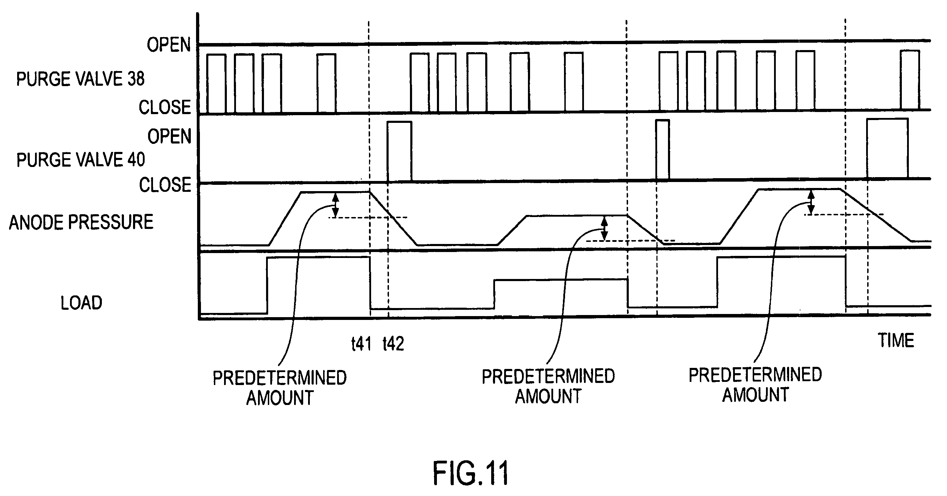

FIG. 11 is an example of a time chart showing the temporal changes in the opening/closing of the purge valve 38, the opening/closing of the purge valve 40, the anode gas pressure, and the load in the fuel cell system according to the second embodiment. When the load decreases at a time *t41*, the target anode pressure also decreases, and the operation enters the descending transition operation. Then, the decrease amount in the anode pressure becomes equal to or more than the predetermined amount at a time *t42*, and the purge valve 40 is thus opened at the time *t42*. With this, the purge valve 40 is remained in the closed state during a period from the time *t41* when the operation enters the descending transition operation to the time *t42* when the decrease amount in the anode pressure becomes equal to or more than the predetermined amount, and the anode gas can thus be prevented from being discharged from the buffer tank 36 during this period.

When the decrease amount in the anode pressure becomes equal to or more than the predetermined amount during the descending transition operation, the purge valve 38 as well as the purge valve 40 may be opened simultaneously.

As described above, in the fuel cell system according to the second embodiment, when the decrease amount in the pressure of the anode gas is equal to or more than the predetermined amount during the descending transition operation, the opening area of the purge valve is controlled to be larger than the opening area of the purge valve during the operation other than the descending transition operation, and the anode gas thus is prevented from being wastefully discharged from the buffer tank 36.

### Third Embodiment

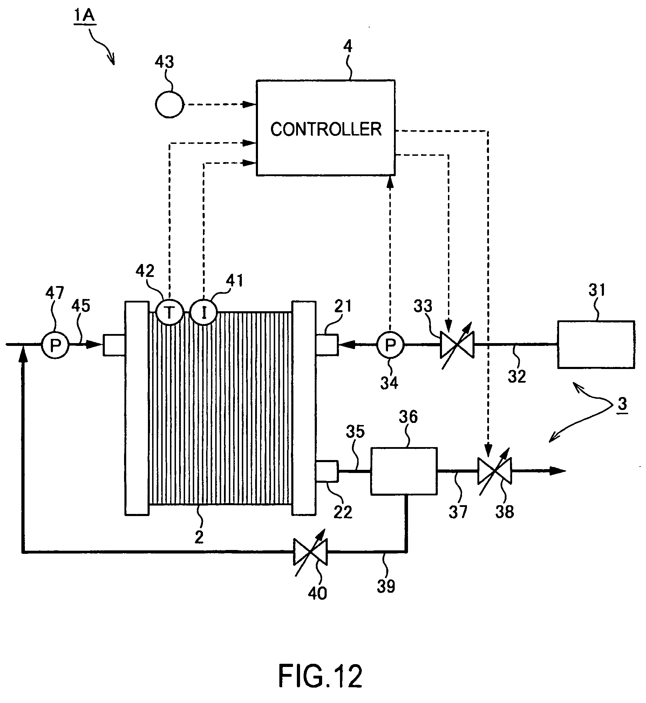

FIG. 12 is a schematic configuration diagram of a fuel cell system 1A according to a third embodiment. The configuration is different from the configuration of the fuel cell system 1 illustrated in FIG. 2 in that the check valve 46 provided between the purge valve 40 and the cathode gas supply passage 45 is omitted and that a pressure sensor 47 for detecting a pressure of the cathode gas (hereinafter referred to as "cathode pressure") is provided in the cathode gas supply passage 45.

The check valve 46 is omitted, and thus, in the fuel cell system 1A according to the third embodiment, when the anode pressure is lower than the cathode pressure, the purge valve 40 is inhibited from opening, thereby preventing the cathode gas from flowing backward from the cathode gas supply passage 45 to the buffer tank 36.

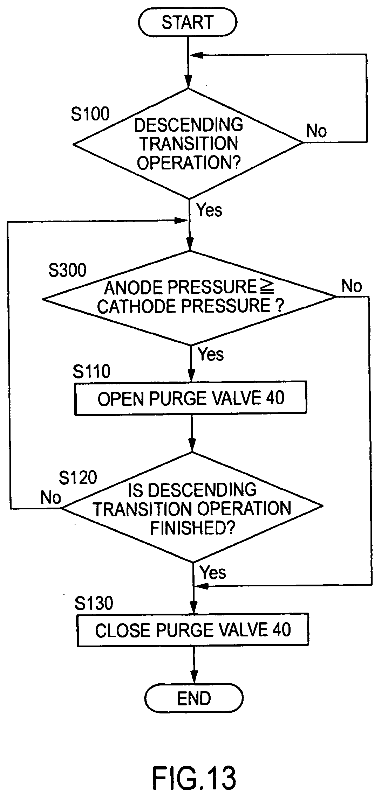

FIG. 13 is a flowchart of open/close control for the purge valve during the descending transition operation carried out by the fuel cell system 1A according to the third embodiment. Steps in which the same processing as that in the steps in the flowchart illustrated in FIG. 7 is carried out are denoted by the same reference numerals, and a detailed description thereof is omitted.

When the controller 4 determines in Step S100 that the operation enters the descending transition operation, the controller 4 proceeds to Step S300.

In Step S300, the controller 4 determines whether the anode pressure detected by the pressure sensor 34 is equal to or more than the cathode pressure detected by the pressure sensor 47 or not. When the controller 4 determines that the anode pressure is less than the cathode pressure, the controller proceeds to Step S130, and closes the purge valve 40. On the other hand, when the controller 4 determines that the anode pressure is equal to or more than the cathode pressure, the controller 4 proceeds to Step S110.

In Step S120 following Step S110, when the controller 4 determines that the descending transition operation has not been finished, the controller 4 returns to Step S300, and when the controller 4 determines that the descending transition operation has been finished, the controller 4 proceeds to Step S130.

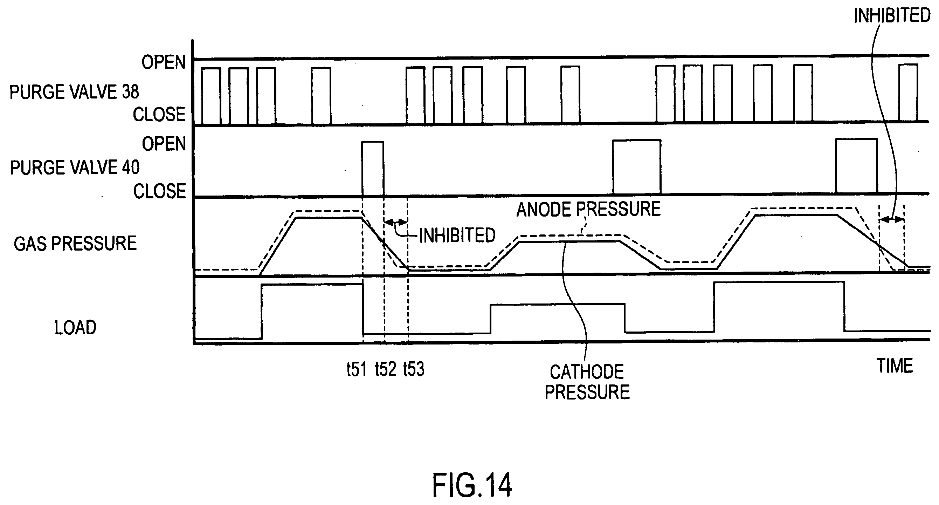

FIG. 14 is an example of a time chart showing the temporal changes in the opening/closing of the purge valve 38, the opening/closing of the purge valve 40, the gas pressures, and the load in the fuel cell system according to the third embodiment. In the gas pressures, the anode pressure is represented by a dotted line, and the cathode pressure is represented by a solid line.

When the load decreases at a time *t51*, the target anode pressure also decreases, and the operation enters the descending transition operation. The anode pressure is equal to or more than the cathode pressure on this occasion, and the controller 4 thus opens the purge valve 40.

Then, when the anode pressure becomes lower than the cathode pressure at a time *t52,* the purge valve 40 is closed even in the course of the descending transition operation. As a result, the cathode gas is prevented from flowing backward from the cathode gas supply passage 45 to the buffer tank 36.

As described above, according to the fuel cell system of the third embodiment, when the anode gas pressure is less than the cathode gas pressure, the purge valve 40 is inhibited from opening even during the descending transition operation, and hence the cathode gas is prevented from flowing backward from the cathode gas supply passage 45 to the buffer tank 36.

This invention is not limited to the respective embodiments described above. For example, according to the first to third embodiments, the anode off-gas is prevented from flowing backward from the buffer tank 36 to the fuel cell stack 2 by opening the purge valve 40 that is larger in opening area than the purge valve 38, which opens/closes during the normal control, during the descending transition operation. However, a configuration of providing only one purge valve variable in the opening area without providing the purge valve 40 different from the purge valve 38 can have the same effect. In other words, one purge valve for changing the opening area at at least two levels is provided, and the purge valve is opened at a smaller opening area during the normal operation other than the descending transition operation, whereas the purge valve is opened at a larger opening area during the descending transition operation.

The control contents described in the respective embodiments may be appropriately combined with each other. Moreover, the embodiments are described for the non-circulation system including the buffer tank, but the problem of the backward flow during the descending transition (pressure decrease) occurs also in a system using an ejector for the circulation, and hence the same effect can be provided by employing this technology. In this case, a circulation flow passage or a volume portion other than power generation areas of the water reservoir tank corresponds to the buffer part.

This application claims priority based on Japanese Patent Application No. 2012-056350 filed with the Japan Patent Office on March 13, 2012.

## Claims

1. A fuel cell system including a fuel cell (2) to be supplied with an anode gas and a cathode gas for generating electric power in accordance with an external load, a pressure regulating valve (33) for controlling a pressure of the anode gas supplied to the fuel cell, and a purge valve (38, 40) for controlling a discharge amount of an anode off-gas discharged from the fuel cell, wherein:
the purge valve includes a first purge valve (38) provided on a first purge passage for discharging the anode off-gas to an outside air and a second purge valve (40) provided on a second purge passage that branches from the first purge passage and is connected to a cathode gas supply passage for supplying the fuel cell with the cathode gas,
the fuel cell system comprising:
a pulsation operation control means (4) configured to control the pressure regulating valve (33) so that the pressure of the anode gas in the fuel cell when the external load is high becomes higher than when the external load is low, and so that the pressure of the anode gas is periodically increased and decreased at a predetermined load; and
a purge valve control means (4) configured to increase an opening area of the purge valve used during a descending transition operation relative to the opening area used during other operations by opening the second purge valve (40) during the descending transition operation.

2. The fuel cell system according to claim 1, wherein:
the opening area of the second purge valve (40) is larger than the opening area of the first purge valve (38); and
the purge valve control means (4) controls the first purge valve (38) to open and close during an operation other than the descending transition operation, and controls the second purge valve (40) to open during the descending transition operation.

3. The fuel cell system according to claim 1, wherein:
the purge valve control means (4) controls the first purge valve (38) to open and close during an operation other than the descending transition operation, and controls the first purge valve (38) and the second purge valve (40) to open during the descending transition operation.

4. The fuel cell system according to any one of claims 1 to 3, further comprising:
an anode gas pressure decrease amount calculation means (4) configured to calculate a decrease amount of the pressure of the anode gas, wherein:
when the decrease amount of the pressure of the anode gas is equal to or more than a predetermined amount during the descending transition operation, the purge valve control means (4) increases the opening area of the purge valve to be larger than the opening area of the purge valve during an operation other than the descending transition operation.

5. The fuel cell system according to any one of claims 1 to 4, further comprising:
a check valve (46) provided between the second purge valve (40) and the cathode gas supply passage (45), for controlling a gas to flow only from the second purge valve (40) to the cathode gas supply passage (45).

6. The fuel cell system according to any one of claims 1 to 4, further comprising:
an anode gas pressure detection means (34) configured to detect the pressure of the anode gas; and
a cathode gas pressure detection means (47) configured to detect a pressure of the cathode gas, wherein:
the purge valve control means (4) inhibits the second purge valve (40) from opening even during the descending transition operation when the pressure of the anode gas is lower than the pressure of the cathode gas.

7. The fuel cell system according to any one of claims 1 to 6, further comprising:
a buffer unit (36) configured to accumulate the anode off-gas discharged from the fuel cell.

8. A method of controlling a fuel cell system including a fuel cell (2) to be supplied with an anode gas and a cathode gas for generating electric power in accordance with an external load, a pressure regulating valve (33) for controlling a pressure of the anode gas supplied to the fuel cell, and a purge valve (38, 40) for controlling a discharge amount of an anode off-gas discharged from the fuel cell, wherein:
the purge valve includes a first purge valve (38) provided on a first purge passage for discharging the anode off-gas to an outside air, and a second purge valve (40) provided on a second purge passage that branches from the first purge passage and is connected to a cathode gas supply passage for supplying the fuel cell with the cathode gas,
the method comprising the steps of:
controlling the pressure regulating valve (33) so that the pressure of the anode gas in the fuel cell when the external load is high becomes higher than when the external load is low, and so that the pressure of the anode gas is periodically increased and decreased at a predetermined load; and
increasing an opening area of the purge valve used during a descending transition operation relative to the opening area used during other operations by opening the second purge valve (40) during the descending transition operation.

## Patentansprüche

1. Brennstoffzellen-System, das eine Brennstoffzelle (2), die mit einem Anodengas und einem Kathodengas zu speisen ist, um elektrische Energie entsprechend einer externen Last zu erzeugen, ein Druckregulierventil (33) zum Steuern eines Drucks des der Brennstoffzelle zugeführten Anodengases sowie ein Spülventil (28, 40) zum Steuern einer Ausstoßmenge eines Anoden-Abgases enthält, das aus der Brennstoffzelle ausgestoßen wird, wobei:
das Spülventil ein erstes Spülventil (38), das sich an einem ersten Spülkanal zum Ausstoßen des Anoden-Abgases an eine Außenluft befindet, sowie ein zweites Spülventil (40) enthält, das sich an einem zweiten Spülkanal befindet, der von dem ersten Spülkanal abzweigt und mit einem Kathodengas-Speisekanal zum Speisen der Brennstoffzelle mit dem Kathodengas verbunden ist,
wobei das Brennstoffzellen-System umfasst:
eine Einrichtung (4) zum Steuern von Pulsations-Betrieb, die so eingerichtet ist, dass sie das Druckregulierventil (33) so steuert, dass der Druck des Anodengases in der Brennstoffzelle, wenn die externe Last hoch ist, höher ist als wenn die externe Last niedrig ist, so dass der Druck des Anodengases bei einer vorgegebenen Last periodisch erhöht und gesenkt wird; und
eine Einrichtung (4) zum Steuern des Spülventils, die so eingerichtet ist, dass sie eine Öffnungsfläche des Spülventils, die bei Abwärtsübergangs-Betrieb eingesetzt wird, relativ zu der Öffnungsfläche vergrößert, die bei anderen Betriebsarten eingesetzt wird, indem sie das zweite Spülventil (40) während der Abwärtsübergangs-Betriebsart öffnet.

2. Brennstoffzellen-System nach Anspruch 1, wobei:
die Öffnungsfläche des zweiten Spülventils (40) größer ist als die Öffnungsfläche des ersten Spülventils (38); und
die Einrichtung (4) zum Steuern des Spülventils das erste Spülventil (38) so steuert, dass es sich während einer anderen Betriebsart als der Abwärtsübergangs-Betriebsart öffnet und schließt, und das zweite Spülventil (40) so steuert, dass es sich während der Abwärtsübergangs-Betriebsart öffnet.

3. Brennstoffzellen-System nach Anspruch 1, wobei:
die Einrichtung (4) zum Steuern des Spülventils das erste Spülventil (38) so steuert, dass es während einer anderen Betriebsart als der Abwärtsübergangs-Betriebsart öffnet und schließt, und das erste Spülventil (38) und das zweite Spülventil (40) so steuert, dass es während der Abwärtsübergangs-Betriebsart öffnet.

4. Brennstoffzellen-System nach einem der Ansprüche 1 bis 3, das des Weiteren umfasst:
die Einrichtung (4) zum Berechnen eines Maßes der Verringerung des Drucks des Anodengases, wobei:
wenn das Maß der Verringerung des Drucks des Anodengases während der Abwärtsübergangs-Betriebsart genauso groß ist wie oder größer als ein vorgegebenes Maß, die Einrichtung (4) zum Steuern des Spülventils die Öffnungsfläche des Spülventils so steuert, dass sie größer ist als die Öffnungsfläche des Spülventils während einer anderen Betriebsart als der Abwärtsübergangs-Betriebsart.

5. Brennstoffzellen-System nach einem der Ansprüche 1 bis 4, das des Weiteren umfasst:
ein Rückschlagventil (46), das sich zwischen dem zweiten Spülventil (40) und dem Kathodengas-Zuführkanal (45) befindet, um ein Gas so zu steuern, dass es nur von dem zweiten Spülventil (40) zu dem Kathodengas-Speisekanal (45) strömt.

6. Brennstoffzellen-System nach einem der Ansprüche 1 bis 4, das des Weiteren umfasst:
eine Einrichtung (34) zum Erfassen des Drucks des Anodengases; und
eine Einrichtung (47), die so eingerichtet ist, dass sie einen Druck des Kathodengases erfasst, wobei:
die Einrichtung (4) zum Steuern des Spülventils selbst während der Abstiegsübergangs-Betriebsart verhindert, dass sich das zweite Spülventil (40) öffnet, wenn der Druck der Anodengases niedriger ist als der Druck des Kathodengases.

7. Brennstoffzellen-System nach einem der Ansprüche 1 bis 6, das des Weiteren umfasst:
eine Puffereinheit (36), die so eingerichtet ist, dass sie das aus der Brennstoffzelle ausgestoßene Anoden-Abgas sammelt.

8. Verfahren zum Steuern eines Brennstoffzellen-Systems,
das eine Brennstoffzelle (2), die mit einem Anodengas und einem Kathodengas zu speisen ist, um elektrische Energie entsprechend einer externen Last zu erzeugen, ein Druckregulierventil (33) zum Steuern eines Drucks des der Brennstoffzelle zugeführten Anodengases sowie ein Spülventil (28, 40) zum Steuern einer Ausstoßmenge eines Anoden-Abgases enthält, das aus der Brennstoffzelle ausgestoßen wird, wobei:
das Spülventil ein erstes Spülventil (38), das sich an einem ersten Spülkanal zum Ausstoßen des Anoden-Abgases an eine Außenluft befindet, sowie ein zweites Spülventil (40) enthält, das sich an einem zweiten Spülkanal befindet, der von dem ersten Spülkanal abzweigt und mit einem Kathodengas-Speisekanal zum Speisen der Brennstoffzelle mit dem Kathodengas verbunden ist,
wobei das Verfahren die folgenden Schritte umfasst:
Steuern des Druckregulierventils (33), so dass der Druck des Anodengases in der Brennstoffzelle, wenn die externe Last hoch ist, höher ist als wenn die externe Last niedrig ist, und so, dass der Druck des Anodengases bei einer vorgegebenen Last periodisch erhöht und gesenkt wird; und
Vergrößern einer Öffnungsfläche des Spülventils, die während einer Abstiegübergangs-Betriebsart eingesetzt wird, relativ zu der Öffnungsfläche, die bei anderen Betriebsarten eingesetzt wird, durch Öffnen des zweiten Spülventils (40) während der Abwärtsübergangs-Betriebsart.

## Revendications

1. Système de pile à combustible incluant une pile à combustible (2) destinée à être alimentée par un gaz d'anode et un gaz de cathode pour générer de l'énergie électrique en fonction d'une charge extérieure, une soupape de régulation de pression (33) pour commander la pression du gaz d'anode délivré à la pile à combustible, et une soupape de purge (38, 40) pour commander la quantité d'évacuation d'un gaz de dégagement d'anode évacué par la pile à combustible, dans lequel :
la soupape de purge comporte une première soupape de purge (38) disposée sur un premier passage de purge pour évacuer le gaz de dégagement d'anode vers l'air l'extérieur et une seconde soupape de purge (40) disposée sur un second passage de purge qui se ramifie à partir du premier passage de purge et est raccordé à un passage d'alimentation de gaz de cathode pour alimenter la pile à combustible avec le gaz de cathode,
le système de pile à combustible comprenant :
un moyen de commande d'opération pulsée (4) configuré pour commander la soupape de régulation de pression (33) de sorte que la pression du gaz d'anode dans la pile à combustible lorsque la charge extérieure est élevée devient plus grande que lorsque la charge extérieure est faible, et de sorte que la pression du gaz d'anode augmente et diminue périodiquement pour une charge prédéterminée ; et
un moyen de commande de soupape de purge (4) configuré pour augmenter l'aire d'ouverture de la soupape de purge utilisée pendant une opération de transition descendante par rapport à l'aire d'ouverture utilisée pendant les autres opérations en ouvrant la seconde soupape de purge (40) pendant l'opération de transition descendante.

2. Système de pile à combustible selon la revendication 1, dans lequel :
l'aire d'ouverture de la seconde soupape de purge (40) est plus grande que l'aire d'ouverture de la première soupape de purge (38) ; et
le moyen de commande de soupape de purge (4) commande la première soupape de purge (38) pour s'ouvrir et se fermer pendant une opération différente de l'opération de transition descendante et commande la seconde soupape de purge (40) pour s'ouvrir pendant l'opération de transition descendante.

3. Système de pile à combustible selon la revendication 1, dans lequel :
le moyen de commande de soupape de purge (4) commande la première soupape de purge (38) pour s'ouvrir et se fermer pendant une opération différente de l'opération de transition descendante et commande la première soupape de purge (38) et la seconde soupape de purge (40) pour s'ouvrir pendant l'opération de transition descendante.

4. Système de pile à combustible selon l'une quelconque des revendications 1 à 3, comprenant en outre :
un moyen de calcul de quantité de diminution de pression de gaz d'anode (4) configuré pour calculer la valeur de la diminution de la pression du gaz d'anode, dans lequel :
lorsque la valeur de la diminution de la pression du gaz d'anode est supérieure ou égale à une valeur prédéterminée pendant l'opération de transition descendante, le moyen de commande de soupape de purge (4) augmente l'aire d'ouverture de la soupape de purge de manière à être supérieure à l'aire d'ouverture de la soupape de purge pendant une opération différente de l'opération de transition descendante.

5. Système de pile à combustible selon l'une quelconque des revendications 1 à 4, comprenant en outre :
une soupape antiretour (46) disposée entre la seconde soupape de purge (40) et le passage d'alimentation de gaz de cathode (45), pour commander l'écoulement de gaz uniquement de la seconde soupape de purge (40) vers le passage d'alimentation de gaz de cathode (45).

6. Système de pile à combustible selon l'une quelconque des revendications 1 à 4, comprenant en outre :
un moyen de détection de pression de gaz d'anode (34) configuré pour détecter la pression du gaz d'anode ; et
un moyen de détection de pression de gaz de cathode (47) configuré pour détecter la pression du gaz de cathode, dans lequel :
le moyen de commande de soupape de purge (4) empêche la seconde soupape de purge (40) de s'ouvrir, même pendant l'opération de transition descendante, lorsque la pression du gaz d'anode est inférieure à la pression du gaz de cathode.

7. Système de pile à combustible selon l'une quelconque des revendications 1 à 6, comprenant en outre :
une unité tampon (36) configurée pour accumuler le gaz de dégagement d'anode évacué de la pile à combustible.

8. Procédé de commande d'une pile à combustible incluant une pile à combustible (2) destinée à être alimentée par un gaz d'anode et un gaz de cathode pour générer de l'énergie électrique en fonction d'une charge extérieure, une soupape de régulation de pression (33) pour commander la pression du gaz d'anode délivré à la pile à combustible, et une soupape de purge (38, 40) pour commander la quantité d'évacuation d'un gaz de dégagement d'anode évacué par la pile à combustible, dans lequel :
la soupape de purge comporte une première soupape de purge (38) disposée sur un premier passage de purge pour évacuer le gaz de dégagement d'anode vers l'air l'extérieur et une seconde soupape de purge (40) disposée sur un second passage de purge qui se ramifie à partir du premier passage de purge et est raccordé à un passage d'alimentation de gaz de cathode pour alimenter la pile à combustible avec le gaz de cathode,
le procédé comprenant les étapes consistant à :
commander la soupape de régulation de pression (33) de sorte que la pression du gaz d'anode dans la pile à combustible lorsque la charge extérieure est élevée devient plus grande que lorsque la charge extérieure est faible, et de sorte que la pression du gaz d'anode augmente et diminue périodiquement pour une charge prédéterminée ; et
augmenter l'aire d'ouverture de la soupape de purge utilisée pendant une opération de transition descendante par rapport à l'aire d'ouverture utilisée pendant les autres opérations en ouvrant la seconde soupape de purge (40) pendant l'opération de transition descendante.
